# EUROPÄISCHE PATENTSCHRIFT

(11) **EP 1 909 620 B1**
(45) Veröffentlichungstag und Bekanntmachung des Hinweises auf die Patenterteilung: **07.04.2010**
(21) Anmeldenummer: 06778161.7
(22) Anmeldetag: 03.08.2006
(51) Int. Cl.: A47J 27/00, A47J 27/21

(54) **KÜCHENGEFÄSS MIT EINEM HEIZBODEN**
KITCHEN VESSEL WITH A HEATED BASE
USTENSILE DE CUISINE A FOND CHAUFFANT

(30) Priorität: 06.08.2005 DE 102005037191
(43) Veröffentlichungstag der Anmeldung: 16.04.2008
(60) Teilanmeldung: 10152230.8
(73) Patentinhaber: Vorwerk & Co. Interholding GmbH, 42275 Wuppertal (DE)
(72) Erfinder: SCHIFFER, Ernst-Uwe, 42111 Wuppertal (DE); HELLRUNG, Dirk, 45239 Essen (DE)
(74) Vertreter: Müller, Enno
(86) Internationale Anmeldenummer: PCT/EP2006/065029
(87) Internationale Veröffentlichungsnummer: WO 2007/017461

(56) Entgegenhaltungen:
- DE-A1- 10 226 939
- GB-A- 2 282 007
- US-A- 3 610 884
- US-A- 4 063 068

## Beschreibung

Die Erfindung betrifft ein Küchengefäß mit einem Heizboden, der elektrisch beheizt wird, wobei der Heizboden aus einem Widerstand-Heizelement besteht, das über an dem Heizboden unterseitig angeordnete Steckvorsprünge elektrisch kontaktiert ist, wobei ein Steckvorsprung an einem unterseitig des Widerstand-Heizelements angeordneten Zweitboden gehaltert ist.

Küchengefäße der in Rede stehenden Art sind bekannt, so beispielsweise in Form von beheizbaren Gefäßen für Küchenmaschinen oder auch in Form von Wasserkochern. Unabhängig von der Art und Ausgestaltung der bekannten Küchengefäße sind diese einem gesonderten Aufsetzadapter, über welchen die Stromversorgung erfolgt, zuordbar. Bei einer Anordnung eines Küchengefäßes der in Rede stehenden Art in einer Küchenmaschine formt ein Gehäuseteil der Küchenmaschine diesen Aufsetzadapter aus. Letzterer verfügt in der Regel über Aufnahmebuchsen oder dergleichen für die bodenseitigen Steckvorsprünge des Küchengefäßes, um hierüber die elektrische Kontaktierung des Heizbodens zu ermöglichen.

Ein derartiges Küchengefäß ist beispielsweise aus der DE 102 26 939 A1 bekannt.

Aus der US-A-3610884 ist ein Küchengefäß gemäß Oberbegriff des Anspruchs 1 bekannt.

Im Hinblick auf den zuvor beschriebenen Stand der Technik wird die Aufgabe der Erfindung darin gesehen, ein Küchengefäß der in Rede stehenden Art im Hinblick auf eine gewünschte Spülmaschineneignung weiter zu verbessern.

Diese Aufgabe ist durch den Gegenstand des Anspruches 1 gelöst. Aufgrund der klebenden Eigenschaften der Verbindung wird eine Trennung der beiden Bauteile, nämlich einer Trennung von Steckvorsprung und Zweitboden verhindert. Die einmal durchgeführte Verbindung ist beispielsweise seitens des Benutzers nicht, zumindest nicht zerstörungslos, aufhebbar. Entsprechend ist die erforderliche Abdichtung stets gegeben. Bevorzugt bedarf es zum Erreichen der gewünschten Abdichtung zwischen Steckvorsprung und Zweitboden keiner weiteren mechanischen Hilfsmittel, wie beispielsweise Schrauben oder dergleichen, was sich neben dem vorgenannten Effekt einer nicht zerstörungsfreien Abnahme des Steckvorsprungs vom Zweitboden noch den zusätzlichen Vorteil einer Bauraumverringerung beinhaltet. Durch die gewählte Abdichtung mittels eines vernetzenden Klebers ist ein spülmaschinengeeignetes Küchengefäß mit einem elektrisch kontaktierbaren Heizboden geschaffen, wobei die die Verbindung des Steckvorsprunges mit dem Zeitboden bildenden Klebmasse zugleich die geforderte Wasserdichte herstellt.

Die Gegenstände der weiteren Ansprüche sind nachstehend in Bezug zu dem Gegenstand des Anspruchs 1 erläutert.

So ist in einer vorteilhaften Weiterbildung des Erfindungsgegenstandes vorgesehen, dass der Klebstoff silikonbasiert ist. So wird weiter bevorzugt ein Zwei-Komponenten-Silikon als Kleb-/Dichtstoff eingesetzt. So kann es sich diesbezüglich weiter beispielsweise um einen kondensationsvernetzenden Zwei-K-Silikonkleber handeln. In vorteilhafter Weise ist hierdurch eine elastische Abdichtung zwischen dem Steckvorsprung und dem Zweitboden erreicht, was in vorteilhafter Weise dazu führt, dass Längen- und Druckänderungen, welche belastungswechselbedingt durch Temperaturschwankungen sowohl im Betrieb als auch während eines Spülmaschinendurchganges auftreten, ausgeglichen werden können. Während die Dichtungen aus dem bekannten Stand der Technik durch Zwischenlage eines Dichtringes beispielsweise über eine Rastverbindung auf Vorspannung gehalten sind, ist bei der erfindungsgemäßen Lösung vorgesehen, dass die Verbindung vorspannungsfrei ist. Entsprechend ist die Kleb-/Dichtverbindung kraftlos gehalten. Während bei einer Abdichtung gemäß dem Stand der Technik die benötigte Vorspannung im Laufe der Zeit durchaus nachgeben kann, was einhergeht mit einer Verschlechterung der Dichteigenschaften, ist gemäß vorliegender Erfindung die geforderte Dichtung aufgrund der vorspannungsfreien Eigenschaften stets erreicht.

Vorgesehen ist gemäß der Erfindung, dass der Steckvorsprung einen außen am dem Zwischenboden anliegenden Halterungsteller aufweist und dass die Klebeverbindung im radial äußeren Bereich des Halterungstellers realisiert ist. Letzterer ist weiter bevorzugt modulartig ausgeformt und trägt in der Regel zwei Steckvorsprünge sowie weiter beispielsweise für den Heizbetrieb erforderliche Bauteile, wie Sensoren oder dergleichen. Auch wird vorgeschlagen, dass die an dem Steckvorsprung ausgebildete Klebefläche aus Kunststoff besteht und die an dem Zwischenboden ausgebildete Klebefläche aus Edelstahl. Selbst diese Materialkombination lässt sich mittels des vorgesehenen, silikonbasierenden Klebstoffes wasserdicht und dauernd, insbesondere nicht zerstörungsfrei miteinander verbinden.

Nachstehend ist die Erfindung anhand der beigefügten Zeichnung, welche lediglich ein Ausführungsbeispiel darstellt, näher erläutert. Es zeigt:
- Fig. 1: eine Ansicht gegen eine Küchenmaschine mit einem erfindungsgemäßen Küchengefäß;

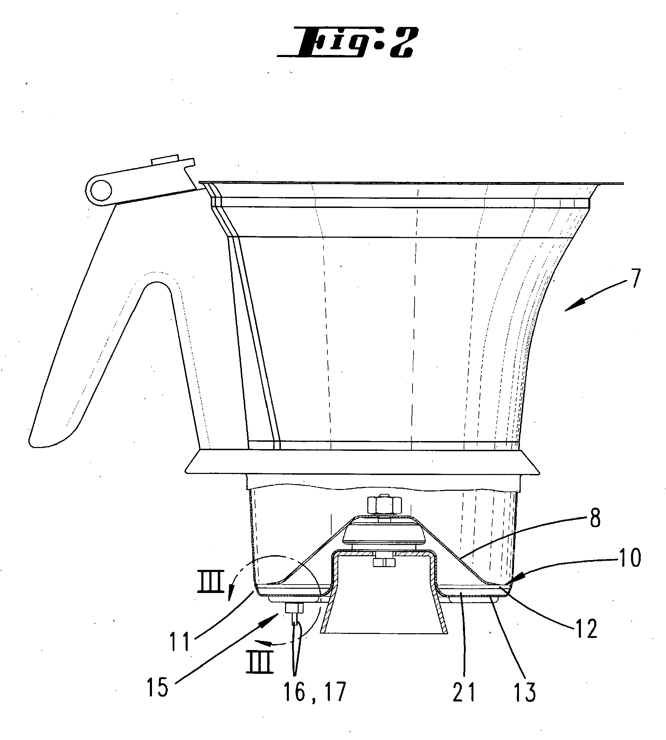

- Fig. 2: das Küchengefäß in Einzeldarstellung mit einem partiell aufgebrochen dargestellten Bodenbereich;
- Fig. 3: die Ausschnittvergrößerung gemäß III in Fig. 2.

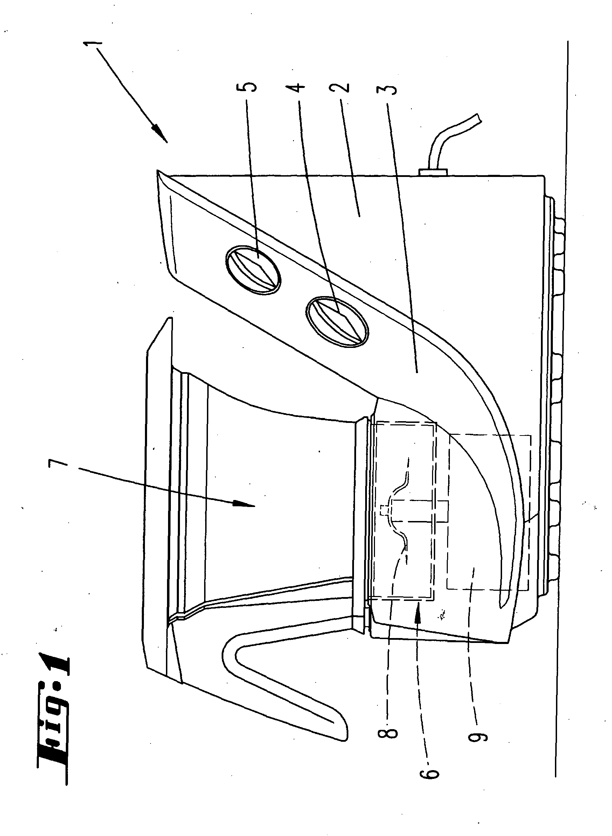

Dargestellt und beschrieben ist zunächst mit Bezug zu Fig. 1 eine Küchenmaschine 1 mit einem Gehäuse 2, welch letzteres ein Bedienfeld 3 aufweist. Dieses Bedienfeld 3 trägt einen Temperaturwähler 4 sowie einen Drehzahlsteller 5.

Des Weiteren weist das Gehäuse 2 einen, einen Aufsetzadapter 6 ausbildenden Aufnahmebereich für ein Küchengefäß 7 in Form eines beheizbaren Rührgefäßes auf. In dem dargestellten Ausführungsbeispiel besitzt das Küchengefäß 7 ein Rührwerk 8. Dieses ist über eine nicht näher dargestellte Kupplung bei in dem Aufsetzadapter 6 eingesetztem Küchengefäß 7 mit einem, über den Drehzahlsteller 5 regelbaren Elektromotor 9 in Verbindung gebracht.

Zudem ist das Küchengefäß 7 bodenseitig mit einem Widerstand-Heizelement 10 in Form einer Dickschichtheizung versehen. Demzufolge erfolgt eine Beheizung des Küchengefäßes 7 von der Unterseite her über dünne Heizungsbahnen, die auf eine emaillierte, den Gefäßboden 11 ausbildende Edelstahlplatte gedruckt sind. Ein Schutzlack, der über die metallischen Bahnen aufgetragen wird, dient zur Passivierung. Bezüglich der Ausbildung des Widerstand-Heizelements 10 wird auf die Patentanmeldung DE 10019126 A1 verwiesen.

An einem zu dem Heizboden 12 beabstandeten Zweitboden 13, welcher in dem dargestellten Ausführungsbeispiel einstückig mit der Gefäßwandung aus Edelstahl gefertigt ist, ist im Bereich einer entsprechend ausgebildeten Zweitboden-Öffnung 14 ein Kontaktmodul 15 gehaltert, welch letzteres zwei, der Stromversorgung dienende Steckvorsprünge 16,17, sowie einen Temperaturfühler 18 trägt, wobei die stromführenden Steckvorsprünge 16,17 den Hohlraum 21 zwischen Heizboden 12 und Zweitboden 13 durchsetzend, das Heizelement 10 bzw. die aufgedruckten Leiterbahnen desselben elektrisch kontaktieren.

Das die Steckvorsprünge 16, 17 sowie den Temperaturfühler 18 tragende Kontaktmodul 15 ist aus einem Kunststoffwerkstoff hergestellt.

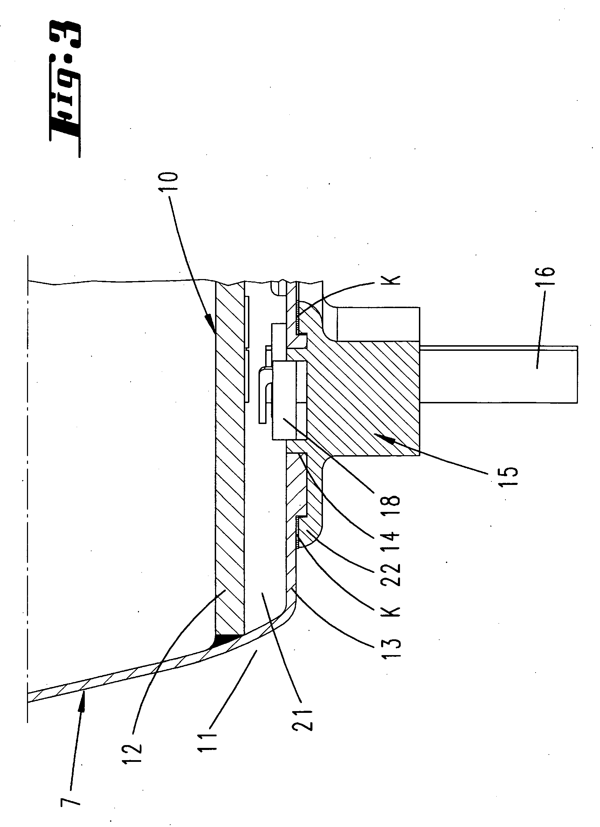

Während der Heizboden 12 innenwandig des Küchengefäßes 7 mit Abstand zum gefäßseitigen Zweitboden 13 durch Verschweißung festgelegt ist, ist die dauerhafte Anordnung des Kontaktmoduls 15 an dem Zweitboden 13 durch Verklebung erreicht. Die Klebestellen sind in der Darstellung in Fig. 3 durch das Bezugszeichen K gekennzeichnet. Wie zu erkennen, ist die Verklebung im radial äußeren Bereich eines aus dem Kontaktmodul 15 herausgeformten Halterungstellers 22 realisiert, wobei entsprechend der gewählten Materialien einer Klebefläche aus Kunststoff eine Klebefläche aus Edelstahl gegenübersteht.

Die Verklebung ist umlaufend entlang der gesamten Randkante des Kontaktmoduls 15 vorgesehen.

Die Verklebung erfolgt mittels eines vernetzenden Klebers, welcher silikonbasiert ist und zufolge dessen dauerhaft elastische Eigenschaften aufweist. So kommt in dem dargestellten Ausführungsbeispiel ein kondensationsvemetzender Zwei-Komponenten-Silikonkleber zum Einsatz. Die hierdurch geschaffene Verbindung zwischen Kontaktmodul 15 und Zweitboden 13 ist aufgrund der elastischen Eigenschaften dauerhaft wasserdicht. Auch kurzzeitige Belastungswechsel bedingt durch Temperaturschwankungen wirken sich nicht nachteilig auf die Dicht- und Klebeeigenschaften aus.

Neben der Klebeverbindung sind keine weiteren mechanischen Verbindungen, wie Schraub- oder Rastverbindungen vorgesehen, zufolge dessen die vorgesehene Klebeverbindung vorspannungsfrei ist.

## Patentansprüche

1. Küchengefäß (7) mit einem Heizboden (12), der elektrisch beheizt wird, wobei der Heizboden (12) aus einem Widerstand-Heizelement (10) besteht, das über an dem Heizboden (12) unterseitig angeordnete Steckvorsprünge (16, 17) elektrisch kontaktiert ist, wobei die Steckvorsprünge (16, 17) an einem unterseitig des Widerstand-Heizelementes (10) angeordneten Zweitboden (13) gehaltert sind wobei die Steckvorsprünge (16, 17) von einem Kontaktmodul (15) getragen sind und das Kontaktmodul (15) mit dem Zweitboden (13) mittels eines vernetzenden Klebers in nur durch Zerstörung aufhebbarer Verbindung verklebt ist **dadurch gekennzeichnet, dass** das Kontaktmodul (15) einen herausgeformten Halterungsteller (22) aufweist, welcher aussen an dem Zweitboden (13) anliegt, und dass die Klebeverbindung (K) nur im radial äußeren Bereich des Halterungstellers (22) realisiert ist.

2. Küchengefäß nach Anspruch 1, **dadurch gekennzeichnet, dass** der Klebstoff silikonbasiert ist.

3. Küchengefäß nach einem der vorhergehenden Anprüche, **dadurch gekennzeichnet, dass** die Verbindung (K) vorspannungsfrei ist.

4. Küchengefäß nach einem der vorhergehenden Ansprüche **dadurch gekennzeichnet, dass** die an dem Kontaktmodul ausgebildete Klebefläche aus Kunststoff besteht und die an dem Zweitboden (13) ausgebildete Klebefläche aus Edelstahl.

## Claims

1. Kitchen vessel (7) with a heating base (12) which is electrically heated, the heating base (12) comprising a resistance heating element (10) with which electrical contact is made by way of plug-in projections (16, 17) that are disposed on the underside of the heating base (12), the plug-in projections (16, 17) being mounted on a second base (13) which is disposed underneath the resistance heating element (10), the plug-in projections (16, 17) being carried by a contact module (15) and the contact module (15) being adhesively bonded to the second base (13) by means of a crosslinking adhesive with a connection which can only be broken by destroying said connection, **characterized in that** the contact module (15) has a mounting plate (22) which is formed from the contact module (15) and rests against the outside of the second base (13), and **in that** the adhesive connection (K) is realized only in the radially outer region of the mounting plate (22).

2. Kitchen vessel according to Claim 1, **characterized in that** the adhesive is silicone-based.

3. Kitchen vessel according to either of the preceding claims, **characterized in that** the connection (K) is free of prestress.

4. Kitchen vessel according to any of the preceding claims, **characterized in that** the bonding surface which is formed on the contact module comprises a plastics material and the bonding surface which is formed on the second base (13) comprises stainless steel.

## Revendications

1. Récipient de cuisine (7) avec un fond chauffant (12), qui est chauffé électriquement, dans lequel le fond chauffant (12) est constitué d'un élément de chauffe à résistance (10) qui est en contact électrique par l'intermédiaire de protubérances enfichables (16, 17) agencées contre le fond chauffant (12) du côté inférieur, les protubérances enfichables (16, 17) étant maintenues contre un deuxième fond (13) agencé du côté inférieur de l'élément de chauffe à résistance (10), les protubérances enfichables (16, 17) étant portées par un module de contact (15) et le module de contact (15) étant collé avec le deuxième fond (13) au moyen d'une colle réticulante en une liaison dissociable uniquement par destruction, **caractérisé en ce que** le module de contact (15) présente un disque de fixation (22) y étant formé, qui repose extérieurement contre le deuxième fond (13), et **en ce que** la liaison de colle (K) est réalisée uniquement dans une région radialement externe du disque de fixation (22).

2. Récipient de cuisine selon la revendication 1, **caractérisé en ce que** la colle est à base de silicone.

3. Récipient de cuisine selon l'une des revendications précédentes, **caractérisé en ce que** la liaison (K) est libre de précontrainte.

4. Récipient de cuisine selon l'une des revendications précédentes, **caractérisé en ce que** la surface adhésive formée sur le module de contact est en matière plastique et la surface adhésive formée sur le deuxième fond (13) est en acier inoxydable.
